(19) Europäisches Patentamt

European Patent Office

Office européen des brevets

(11) Veröffentlichungsnummer: **0 326 623 B1**

(12) **EUROPÄISCHE PATENTSCHRIFT**

(45) Veröffentlichungstag der Patentschrift: **31.03.93**

(21) Anmeldenummer: **88101358.5**

(22) Anmeldetag: **30.01.88**

(51) Int. Cl.⁵: **G01S 15/87**, G01S 15/93, G10K 11/34, G10K 11/20

(54) Verfahren zum Orten eines Hindernisses.

(43) Veröffentlichungstag der Anmeldung:
09.08.89 Patentblatt 89/32

(45) Bekanntmachung des Hinweises auf die
Patenterteilung:
31.03.93 Patentblatt 93/13

(84) Benannte Vertragsstaaten:
BE CH DE ES FR GB IT LI NL SE

(56) Entgegenhaltungen:
EP-A- 0 066 876          DE-A- 3 518 613
DE-U- 8 531 180          GB-A- 2 060 307
US-A- 4 581 685          US-A- 4 674 073

PATENT ABSTRACTS OF JAPAN, Band 5, Nr.
161 (P-84)[833], 16. Oktober 1981; & JP-A-56
93 064 (KAIJIYOU DENKI K.K.) 28-07-1981

(73) Patentinhaber: **Mayser GmbH & Co.**
**Örlinger Strasse 1-3**
**W-7900 Ulm/Donau(DE)**

(72) Erfinder: **Kremser, Johann**
**Auf der Sonnwiese 14**
**A-8600 Bruck/Mur(AT)**

(74) Vertreter: **Wilhelm & Dauster Patentanwälte**
**European Patent Attorneys**
**Hospitalstrasse 8**
**W-7000 Stuttgart 1 (DE)**

**Beschreibung**

Die Erfindung betrifft ein Verfahren zum Orten eines Hindernisses in Bezug auf ein, mit einem unbemannten beweg- und lenkbaren Fahrzeug mit bewegten Koordinatensystem mittels in Fahrtrichtung von Sendern abgestrahlten und bei Vorhandensein eines Hindernisses von Aufnehmern empfangenen reflektierten Ultraschallwellen, wobei entsprechend der empfangenen Informationen zur Vermeidung einer Kollision Lenk- und/oder Bremssignale an das Fahrzeug weitergegeben werden; sowie ein Ortungssystem für die Lage eines Hindernisses.

In der deutschen Patentschrift 35 18 613 wird ein Hinderniserfassungssystem für ein selbstfahrendes, lenkbares Fahrzeug, das an seiner zur Fahrtrichtung weisenden Seite mehrere, in einer Reihe nebeneinander angeordnete Ultraschallwellenimpulssender und wenigstens in der Mitte der Reihe einen Ultraschallwellenempfänger aufweist, mit einer Einrichtung zum Erregen der Ultraschallwellensender und einer Empfangsauswerteeinrichtung, die eine Information über ein in Fahrtrichtung liegendes Hindernis und über dessen ggfs. vorhandene seitliche Ablage in Bezug auf die Mittenachse des Fahrzeugs liefert, offenbart, das sich dadurch auszeichnet, daß der Vielzahl der Sender nur der eine Empfänger zugeordnet ist, daß die gleichfrequente Erregung gleichzeitig beginnt und daß in einer ersten Betriebsart die dem Empfänger benachbart liegenden Sender eine maximale Zahl von Impulsen aussenden und die ihnen benachbart angeordneten Sender mit zunehmendem Abstand vom Empfänger eine abnehmende Zahl von Impulsen aussenden. Anschließend in einer zweiten Betriebsart der am einen Ende der Reihe liegende Sender eine maximale Zahl von Impulsen aussendet und die anderen Sender eine mit zunehmendem Abstand von dem Genannten an diesem Ende der Reihe liegenden Sender abnehmende Zahl von Impulsen aussenden und anschließend in einer dritten Betriebsart, der am anderen Ende der Reihe liegende Sender eine maximale Anzahl von Impulsen aussendet, während die anderen Sender eine mit zunehmendem Abstand von dem Genannten an jedem Ende der Reihe liegenden Sender abnehmende Zahl von Impulsen aussendet. Hierdurch wird ein Ortungssystem offenbart, bei dem durch vorsätzlich gerichtete Ultraschallwellen einmal der Mittenbereich sowie die beiden Seitenbereiche nur an bestimmten Stellen abgetastet werden. Hierdurch ist eine stetige Überwachung des Fahrraums vor einem unbemannten Fahrzeug nicht möglich. Um ein Signal zu erhalten, müssen stets mehrere Ultraschallimpulse ausgesandt werden. Dies führt zu einer aufwendigen und nicht fehlerfreien Überwachung und Auswertung.

In der deutschen Offenlegungsschrift 30 34 511 wird ein Hindernisdetektor für Fahrzeuge offenbart, der mit Hilfe von Lichtsignalen den Raum vor einem Fahrzeug überwacht und wobei durch Reflexion der Strahlen an Hindernissen ein rechtzeitiges Bremsen des Fahrzeugs vor einem auftretenden Hindernis eingeleitet werden soll. Auch hiermit ist eine fehlerfreie Überwachung des Raums vor einem unbemannten Fahrzeug nicht möglich.

Der so bekannt gewordene Stand der Technik kennt keine Schutzmaßnahmen gegen Fremdeinflüsse, wie fremde Lichtquellen oder fremde Ultraschallsender, die das Überwachungsergebnis verfälschen oder zunichte machen können. Auch ist die Überwachung einer von mehreren Sendern ausgestrahlten Impulskurve durch einen einzigen Empfänger aufwendig. Darüber hinaus fällt bei Ausfall des einzigen Ultraschallempfängers die komplette Ultraschallüberwachungseinrichtung aus.

Ausgehend hiervon liegt der vorliegenden Erfindung die Aufgabe zugrunde, eine genaue Lagebestimmung eines Hindernisses störsicher im Bezug auf ein, mit einem unbemannten beweg- und lenkbaren Fahrzeug, bewegten Koordinatensystem durchzuführen. Diese Aufgabe wird durch die erfinderischen Merkmale des Anspruchs 1 gelöst. Durch die Aussendung eines Ultraschallimpulses aus jedem von zwei nebeneinanderliegenden als Ultraschallsender geschalteten Ultraschallwandlern, gleichphasig und gleichfrequent und durch Empfangen der an einem eventuellen Hindernis reflektierten Ultraschallwellen an derselben Stelle, an denen der Ultraschallimpuls ausgesandt wurde, sowie einer Frequenzanalyse der empfangenen Informationen, einem danach folgenden Fortschreiten und erneuten Aussenden des Ultraschallimpulses von der zweiten und der neuen Quelle sowie das Empfangen einer reflektierten Ultraschallwelle ebenfalls an den Stellen der Aussendung mit ebenfalls einer Frequenzanalyse dieser Werte und ein Fortschreiten über die gesamte Breite des Fahrzeugs sowie Messung der Laufzeiten reflektierter Ultraschallwellen zu den Stellen ihrer Sendung und durch Differenzbildung der beiden Laufzeiten kann die genaue Lage eines Hindernisses zum Koordinatenursprung festgestallt werden, Es wird eine eindeutige und sichere Überwachung des Raumes vor einem unbemannten Fahrzeug erreicht, die störsicher durch die Frequenzanalyse der empfangenen Ultraschallimpulse wird. Darüberhinaus wird durch die paarige, gleichphasige und gleichfrequente Abstrahlung eines Ultraschallimpulses eine Verstärkung erreicht, die erfindungsgemäß zu einer größeren Reichweite des Einzelimpulses führt, im Gegensatz zur Abstrahlung des Einzelimpulses aus einem Sender.

Eine Ausgestaltung des erfinderischen Erkennungsverfahrens ist in Anspruch 2 unter Schutz gestellt. Durch die Änderung der Frequenz bei einer Fortschaltung auf das nächste Paar von Sendern, wird der

EP 0 326 623 B1

Einfluß einer Auslöschung reflektierter Wellen durch die Oberfläche des detektierten Gegenstandes eindeutig vermieden. Dies ist insbesondere dann von Bedeutung, wenn Personen mit verschieden absorbierenden Kleidungsstücken, beispielsweise hervorgerufen durch die Maschenweite des Stoffes in den Fahrbereich eines unbemannten Fahrzeugs gelangen.

Eine andere Ausgestaltung des Erfindungsgegenstandes wird in Anspruch 3 unter Schutz gestellt. Hier wird zunächst der Fahrraum vor dem Fahrzeug mit einer Frequenz abgetastet; beim nächsten Abtastlauf mit einer anderen Frequenz und bei nachfolgenden Abtastläufen ebenfalls mit anderen Frequenzen. Es hat sich herausgestellt, daß die Verwendung von drei Ultraschallfrequenzen praktisch ausreichend für eine sichere Überwachung des Fahrraums vor dem unbemannten Fahrzeug sind.

In den Ansprüchen 4 und 5 wird die Fortschaltung des jeweils paarig auszusendenden Ultraschallimpulses unter Schutz gestellt. Diese verschiedenen Fortschaltregeln besitzen dann eine große Bedeutung, wenn das unbemannte Fahrzeug entweder in Lägern mit verhältnismäßig schmalen Gängen entlangfährt oder im freien Gelände, bei dem von beiden Seiten Hindernisse, beispielsweise Personen oder andere unbemannte Fahrzeuge in die Fahrbahn eindringen können oder im Falle des Fahrens des unbemannten Fahrzeugs entlang einer Wand, bei der nur von einer Seite eine Störung des Fahrraumes auftreten kann.

Durch die erfinderische Verfahrensvorschrift gemäß Anspruch 6, mindestens eine Laufzeitschwelle vorzusehen, wird es möglich, festzustellen, ob das Hindernis in der Mitte zwischen den beiden Empfängern näher beim einen oder näher beim anderen Empfänger vorhanden ist, oder ob das Hindernis zwar außerhalb des Fahrraumes, aber noch im Sicherheitsbereich des Fahrzeuges sich aufhält, oder ob es sich um einen ausgedehnten Körper bis hin zu einer Wand handelt, welche im Fahrraum vor dem Fahrzeug vorhanden ist.

Die der Erfindung zugrundeliegende Aufgabe läßt sich auch durch ein Ortungssystem für die Lage eines Hindernisses zu einem, mit einem unbemannten Fahrzeug bewegten Koordinatensystem mit an der Frontseite des Fahrzeugs angeordneten Ultraschallsendern und Ultraschallempfängern gemäß den erfinderischen Merkmalen des Anspruchs 7 lösen. Durch die Anordnung von mindestens drei gleich beabstandeten Ultraschallsendern, die umschaltbar sind als Ultraschallempfänger, an der Frontseite des unbemannten Fahrzeugs wird eine Ultraschallabtastung des Raumes vor dem Fahrzeug erreicht; diese Ultraschallinformationen werden zur Analyse einem Rechner zugeführt. Das hierdurch entstehende Ultraschallraster vor dem Fahrzeug kann an jede gewünschte Fahrzeugbreite angepaßt werden und gibt ein genaues Ultraschallbild von evtl. vorhandenen Hindernissen. Es kann auch durch Veränderung der Abstände zwischen den Wandlern das Ultraschallraster entsprechend den Überwachungsbedingungen enger oder weiter gestaltet werden. Im Gegensatz zu den bekannt gewordenen Überwachungseinrichtungen, die mit mindestens zwei weiteren Elementen erweitert werden müssen, ist das erfindungsgemäße Ortungssystem bereits mit einem einzigen Wandler, der als Ultraschallsender und -empfänger dient, erweiterbar.

Im Anspruch 8 wird eine besondere Schaltungsanordnung für die als Sender und Empfänger zu schaltenden Wandler unter Schutz gestellt, mit der es ermöglicht wird, daß jeweils die ungeradzahligen Empfänger und geradzahligen Empfänger auf einen Eingang in einem Speicher geschaltet werden können.

Anspruch 9 stellt die Anordnung eines elektrostatischen Wandlers in einem verschmutzsicheren Gehäuse unter Schutz, während Anspruch 10 einen Piezowandler einschließlich Gehäuse unter Schutz stellt. In der nachfolgenden Beschreibung wird die Erfindung anhand eines in einer Zeichnung dargestellten Ausführungsbeispiels näher erläutert.

Es zeigen:

Fig. 1          eine Draufsicht auf einen Ultraschallortungsbereich vor einem unbemannten beweg- und lenkbaren Fahrzeug.

Fig. 2          eine perspektivische Darstellung eines unbemannten Fahrzeuges mit einem Ultraschallhindernisortungssystem nach der Erfindung

Fig. 3a und 3b   Blockschaltbilder eines Steuergerätes zur Steuerung der Ortungseinrichtung

Fig. 4          ein Flußschema zur Erläuterung des erfindungsgemäßen Verfahrens

Fig. 5          eine Prinzipdarstellung zur Erfassung und Berechnung von Laufzeitunterschieden

Fig. 6          eine Anordnung eines elektrostatischen Wandlers als Ultraschallsender und -empfänger und

Fig. 7          eine Anordnung eines Piezowandlers als Ultraschallsender und -empfänger

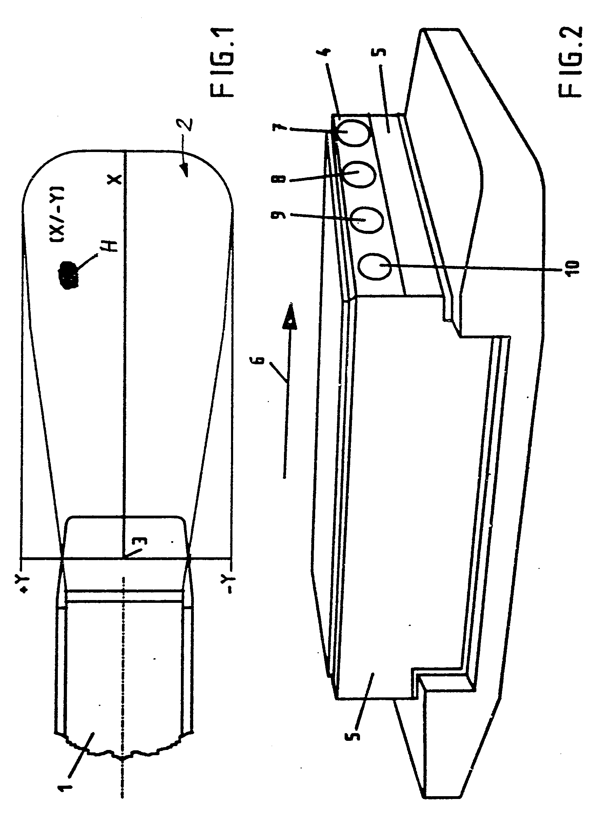

Fig. 1 zeigt in einer Draufsicht ein unbemanntes Fahrzeug 1 mit einem Ultraschallortungsbereich 2, der zum besseren Verständnis durch eine strichlierte Linie eingegrenzt ist. Dieser Ultraschallortungsbereich 2 erstreckt sich stets in die momentane Fahrtrichtung des unbemannten Fahrzeugs 1. Des weiteren ist ein Koordinatensystem mit einem Koordinatenursprung 3 vorgesehen. Im Ausführungsbeispiel handelt es sich um ein orthogonales Koordinatensystem, dessen Koordinatenursprung 3 auf der Mittenachse des Fahrzeugs 1 liegt. Dabei erstreckt sich die X-Achse dieses Koordinatensystems in Fahrtrichtung, während die Y-Achse

3

senkrecht hierzu verläuft. Ein in diesem Koordinatensystem angenommenes Hindernis H ist somit in seiner Lage durch die Koordinaten X und Y definiert.

Wie der Fig. 1 weiter zu entnehmen ist, erstreckt sich der Ultraschallortungsbereich 2 über die Fahrzeugbreite des unbemannten Fahrzeugs 1 hinaus, so daß auch noch Hindernisse außerhalb der Fahrzeugbreite erkannt werden können. Dies ist insbesondere dann wichtig, wenn mit fließendem Querverkehr oder mit Fußgängern zu rechnen ist. Hierdurch werden diese Störungen im Bereich vor dem unbemannten Fahrzeug 1 schon so früh erkannt, daß für diese Störungen rechtzeitig beispielsweise Ausweichbewegungen des unbemannten Fahrzeugs 1 eingeleitet werden können.

In Fig. 2 wird das unbemannte Fahrzeug 1 in beladenem Zustand in perspektivischer Darstellung gezeigt. Hierbei kann eine Ultraschallortungseinrichtung 4, wie dargestellt, an einer Frontseite 5 oder bei Bedarf auch an der anderen Frontseite 5' des unbemannten Fahrzeugs 1 angebracht sein. Durch einen Pfeil 6 wird die augenblickliche Fahrtrichtung, die in positiver X-Richtung verläuft, dargestellt. Die Ultraschallortungseinrichtung 4 weist in Abhängigkeit der Fahrzeugbreite eine bestimmte Anzahl von Ultraschallwandlern 7, 8, 9, 10 in einer Reihe nebeneinander auf. Diese Ultraschallwandler 7, 8, 9, 10 werden im sogenannten "Single Transducer Mode" betrieben, d. h. jeder einzelne Ultraschallwandler 7 bzw. 8 bzw. 9 bzw. 10 ist sowohl Sender als auch Empfänger. Die für eine eindeutige Ultraschallüberwachung des Raumes vor dem Fahrzeug erforderliche Anzahl N von Ultraschallwandlern, die sowohl als Sender als auch als Empfänger wirken, ist im wesentlichen abhängig von der Fahrzeugbreite und wird nach folgender Gleichung bestimmt:

$$N = \left[ \frac{\text{Fahrzeugbreite} + \alpha}{\beta} \right] + 1$$

wobei: N die Anzahl der Ultraschallwandler darstellt die Fahrzeugbreite in Millimeter eingesetzt wird $\alpha$ eine Konstante für die Randbreite des Fahrzeugs ist und im Ausführungsbeispiel mit 100 festgelegt wurde
$\beta$ ein konstantes Maß für den Abstand zweier Ultraschallwandler in mm voneinander ist um eine eindeutig lückenlose Überwachung zu erreichen; im Ausführungsbeispiel wurde dieses Maß mit 300 mm festgelegt.

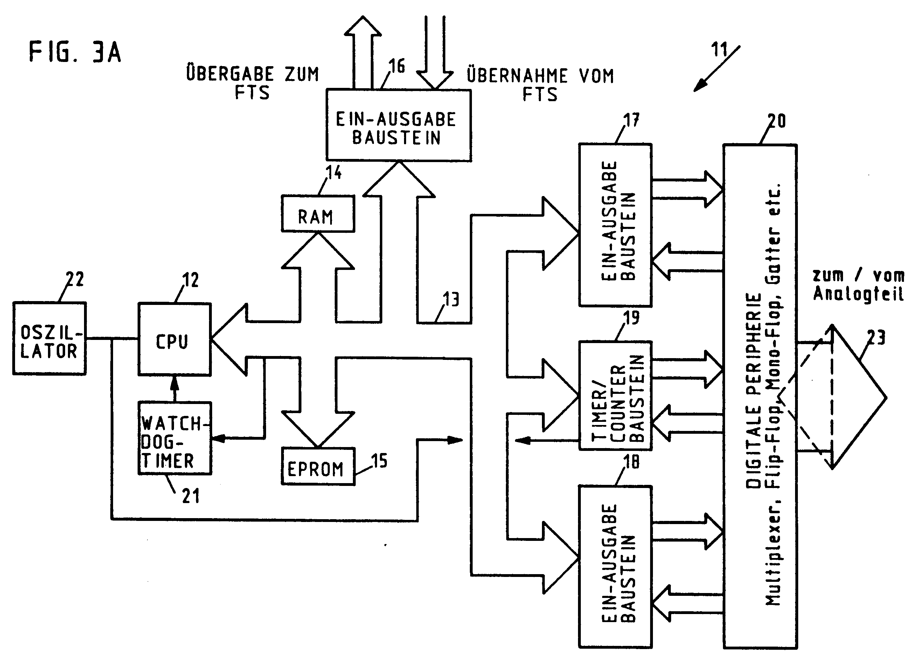

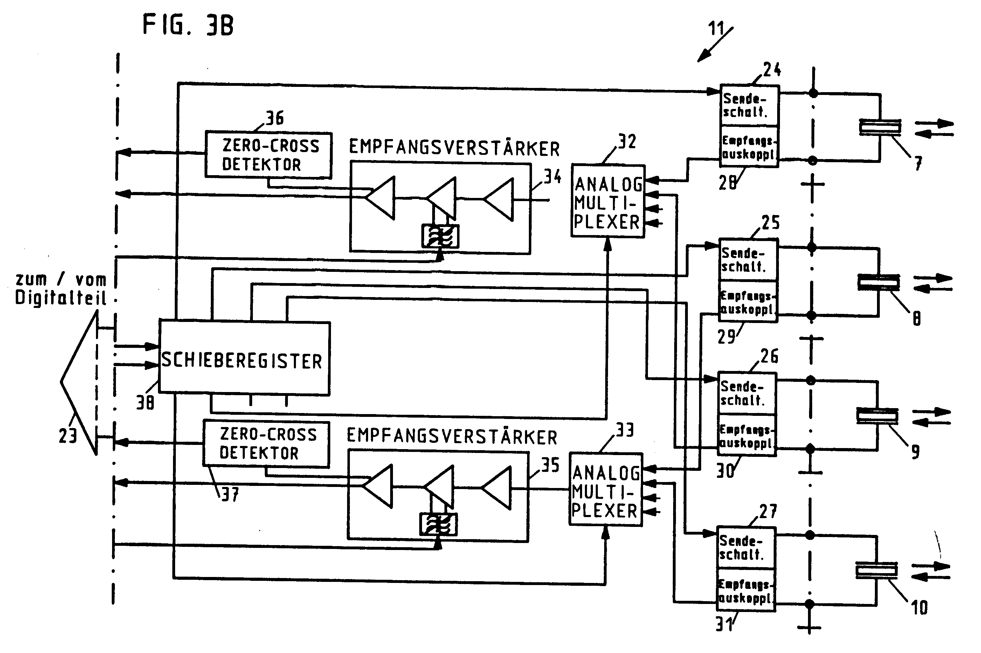

Eine Steuerschaltung 11 für die Ortungseinrichtung 4 wird anhand der Fig. 3a und 3b erläutert. In Fig. 3a ist der Digitalteil und in Fig. 3b der Analogteil der Steuerschaltung 11 dargestellt. Dabei ist in Fig. 3a eine Zentraleinheit 12 (CPU) über einen Daten- und Adreßbus 13 mit einem Speicher mit direktem Zugriff 14 (RAM) mit einem Festwertspeicher 15 (EPROM), welcher ein Steuerprogramm für die Steuerschaltung 11 beinhaltet mit einem Ausgabebaustein 16 der Daten zum unbemannten Fahrzeug übergibt und von diesem übernimmt, verbunden. Über den Daten- und Adreßbus 13 ist die CPU 12 mit weiteren Ein- und Ausgabebausteinen 17 und 18 und einem Timer/Counter Baustein 19 verbunden, die einerseits Steuersignale vom Datenbus 2 einer digitalen Peripherie 20 übergeben und andererseits Signale von der digitalen Peripherie 20 zum Datenbus 2 übertragen. Weiterhin ist ein Watchdog-Timer 21 vorgesehen, der einen automatischen Neubeginn des Steuerablaufs bei Störungen in der Steuerschaltung 11 gewährleistet. Die CPU 12 und der Timer/Counter Baustein 19 werden über eine Oszillatorschaltung 22 synchron getaktet. Über Verbindungsleitungen 23 wird der Digitalteil über die digitale Peripherie 20 mit dem Analogteil (Fig. 3b) der Steuerschaltung 11 verbunden.

Im Analogteil sind gemäß Ausführungsbeispiel für jeden Ultraschallwandler 7 bzw. 8 bzw. 9 bzw. 10 eine Sendeschaltung 24 bzw. 25 bzw. 26 bzw. 27 vorgesehen. Die Anzahl der Sendeschaltungen ist grundsätzlich identisch mit der Anzahl der verwendeten Ultraschallwandler. Hingegen werden die Ultraschallwandler im Ausführungsbeispiel 7, 8, 9, 10 empfangsmäßig über Empfangskopplungen 28, 29, 30, 31 über getrennte Analogmultiplexer 32 und 33 an zwei getrennte Empfangsverstärker 34 und 35 gemultiplext angeschaltet. Hierbei werden die ungeradzahligen Ultraschallwandler im Ausführungsbeispiel 7 und 9 zum Empfangsverstärker 34 und die geradzahligen im Ausführungsbeispiel 8 und 10 zum Empfangsverstärker 35 geleitet. Die Inhalte der Empfängerverstärker 34, 35 werden je einem Zero-Cross-Detektor zugeführt und dort digitalisiert. Die so empfangenen und digitalisierten Echos der ausgesandten Ultraschallimpulse werden von den Zero-Cross-Detektoren 36, 37 zum Digitalteil der Steuerschaltung 11 weitergegeben. Falls im Digitalteil der Steuerschaltung 11 beim Vergleich der empfangenen Echowerte mit den dort angegebenen Werten ein Hindernis mit seinen Koordinaten ermittelt wird, werden von der Steuerschaltung 11 über den Eingabe-/Ausgabebaustein 16 an das unbemannte Fahrzeug 1 Steuerbefehle z. B. an die Lenk- und/oder Bremseinheiten weitergegeben.

Ein Schieberegister 38 selektiert, gesteuert vom Digitalteil der Steuerschaltung 11 die jeweils aktiven Ultraschallwandler 7, 8, 9 sende- und empfangsmäßig.

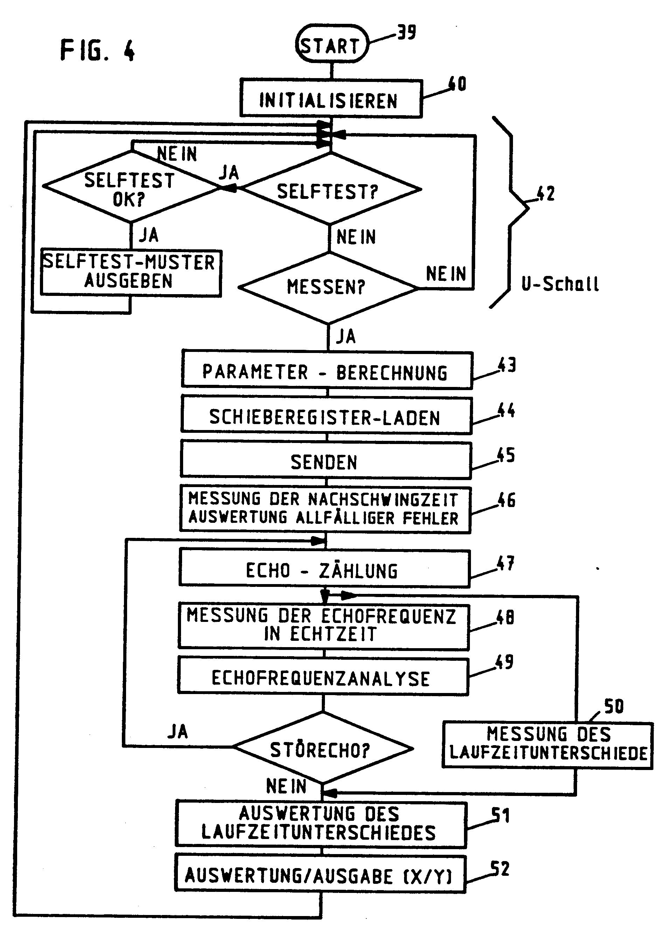

Anhand eines in Fig. 4 dargestellten Flußschema wird das Verfahren näher erläutert. Durch ein Startsignal 39, welches den Beginn einer Ultraschallmessung vorbereitet, wird zunächst die Zentraleinheit CPU 12 zurückgestellt. Anschließend wird in einer Initialisierungsphase 40 festgelegt, in welcher Betriebsart die buskompatiblen Bausteine 16, 17, 18, 19 zu arbeiten haben. So werden die Ein- und Ausgabebausteine 16, 17, 18 in Ein- und Ausgangsports unterteilt. Des weiteren werden im Timer/Counter Baustein 19, der mehrere voneinander unabhängige Timer/Counter enthält, die jeweiligen Betriebsarten dieser festgelegt und zwar handelt es sich im vorliegenden Falle um Ereigniszähler, programmierbare Mono-Flop und Rechteckgeneratoren. Anschließend erfolgt in der Initalisierungsphase 40 auch eine steuerspezifische Datenabspeicherung in das RAM 14. So werden beispielsweise in Abhängigkeit des im EPROM 15 abgespeicherten Ultraschallwandlertyps (elektrostatisch oder piezoelektrisch) die für diesen Typ spezifischen Werte wie Sendespannung, Sendefrequenz, Sendeimpulsfolge und Nachschwingzeit in das RAM 14 eingespeichert und von hier aus bei einem Meßvorgang über den Timer/Counter Baustein 19 dem Analogteil der Steuerschaltung 11 übergeben.

Nach Beendigung der Initialisierung werden in einer Selbsttest-Schleife 42 über Ausgabebefehle der Ausgabebausteine 16, 17, 18 die Schaltkreise der digitalen Peripherie 20 wie Multiplexer, Flip-Flop, Mono-Flop und Gatter vorab in einen definierten Zustand gebracht.

Über anschließende Einlesebefehle durch die Eingabebausteine 16, 17, 18 werden diese Zustände abgefragt. Stimmen diese mit einem vorgegebenen Muster überein, so wird ein signifikantes Selftest-Muster über den Ausgabebaustein 16 an des unbemannte Fahrzeug 1 übergeben. Des weiteren wird in dieser Selftest-Schleife 42 zyklisch abgefragt, ob von Fahrzeug eine Ultraschallortung angefordert wird. Ist dies der Fall, so wird das Meßverfahren mit einer Parameterberechnung 43 begonnen. Dabei werden Größen, die sich anwendungsspezifisch ändern können, entsprechend umgerechnet und für das weitere Verfahren im RAM 14 abgelegt. Diese Größen sind vor allem Anzahl der Ultraschallwandler, Ultraschallwandlertyp - es können sowohl elektrostatische Wandler als auch Piezowandler verwendet werden -, Reichweite in Fahrtrichtung (X-Koordinate), Reichweite quer zur Fahrtrichtung (Y-Koordinate), Abstände der Ultraschallwandler 7, 8, 9, 10 untereinander, Höhe der Ultraschallwandler 7, 8, 9, 10 über Bodenniveau und ähnliches. Daraus werden dann verfahrensspezifische Kenngrößen wie Sendespannung, Sendefrequenzen, Blockierdistanzen, Wartezeiten zwischen den jeweiligen Meßzyklen errechnet. Im nächsten Programmschritt 44 erfolgt ein Abladen von sende- und Empfangsmustern im Schieberegister 38. Dadurch wird festgelegt, welche Ultraschallwandler 7, 8, 9, 10 über ein Serial-in/Parallel-out Register fér den jeweils nachfolgenden Meßzyklus aktiviert werden. Es werden also die Daten zwischen den Digitalteil der Steuerschaltung 11 und dem Analogteil der Steuerschaltung 11 seriell über die Leitungen 23 übertragen. Hierdurch können einerseits Leitungen, andererseits Ausgangsbausteine eingespart werden. Die Reihenfolge und die Muster, nach denen die einzelnen Ultraschallwander 7, 8, 9, 10 an- und weggeschaltet werden, sind in einer Programmtabelle abgelegt. So kann die Fortschaltungsart einfach variiert werden. Vorzugsweise erfolgt sie von linken zum rechten Frontende des unbemannten Fahrzeugs 1 oder umgekehrt oder überhaupt alternierend. Nach dieser Sendevorbereitung wird im Sendeprogrammschritt 45 mit der eigentichen Abstrahlung von Ultraschallimpulsen begonnen.

Dabei wird nur ein Impuls, der in Abhängigkeit des Wandlertyps aus mehreren Sinusschwingungen besteht, gleichzeitig gleichfrequent und gleichphasig parallel an zwei nebeneinanderliegende Ultraschallwandler 7, 8 bzw. 8, 9 bzw. 9, 10, die als Sender geschaltet sind, angelegt. Diese wandeln die elektrischen Impulse in Ultraschallimpulse um und strahlen sie gerichtet in Fahrtrichtung ab. Durch einen Parallelbetrieb der Ultraschallsender wird eine Überlagerung der Ultraschallwellen im Strahlungsbereich erzielt, womit in der Folge eine entscheidende Reichweitenerhöhung durchgeführt werden kann, so daß eine Ultraschallüberwachung in Größenordnungen von ca. 8 Metern vor dem unbemannten Fahrzeug 1 durchgeführt werden kann.

In Abhängigkeit des Materials und der Oberflächengestaltung des Hindernisse kann darüber hinaus die Phase der reflektierten Schallwelle geändert werden. Unter gewissen Voraussetzungen, vorzugsweise bei Textilien - Kleidung beim Menschen - kann sich die Phase einer vom Ultraschallwandler ausgesendeten Welle um 180° zu der vom Hindernis reflektierten Ultraschallwelle verschieben. Dies bedeutet in der Folge eine Auslöschung der Ultraschallwelle, womit in diesem Falle eine Hinderniserkennung unmöglich wird. Ändert man, wie erfindungsgemäß vorgeschlagen, permanent die Sendefrequenzen, so kann man diesen Nachteil vermeiden, da kaum alle Frequenzen von ein und demselben Reflektor ausgelöscht werden können.

Die verschiedenen Sendefrequenzen werden ausschließlich über Softwarealgorithmen erzeugt um ein möglichst grosses Spektrum an Sendefrequenzen einfach generieren zu können. Dabei wird über Ausgabebefehle des Ein- Ausgabe Bausteins 16 ein programmierbares Mono-Flop im Timer/Counter Baustein 19 getriggert. Der Ausgang dieses Mono-Flops treibt über diverse Schaltungen in der digitalen Peripherie 20 die über das Schieberegister 38 ausgesuchten Sendeschalterungen 24, 25, 26, 27. Über diese Sendeschaltungen werden die Wandler 7, 8, 9, 10 gespeist, die dann Ultraschallwellen abstrahlen. Um in Abhängigkeit der Hindernisart ein möglichst großes Spektrum an Abstrahlpegeln erzielen zu können, kann die Sendespannung mit einfachsten Mitteln, nämlich über Umprogrammierung des Mono-Flops, in weiten Grenzen variiert werden. Damit werden vor allem die Mehrfachechos, die vorzugsweise bei Hindernissen im Nahbereich des Fahrzeuges auftreten können, gut unterbunden.

Nach dem Ende der Energiezufuhr zum Wandler hört die Schwingung nicht sofort auf. Der Wandler schwingt "nach", wobei die Schwingungsamplituden nach einer e-Funktion abklingen. Innerhalb dieser Nachschwingzeit können deshalb keine reflektierten Echos ausgewertet werden. Die Nachschwingzeiten hängen dabei im wesentlichen von folgenden Größen ab:

a) Wandlertyp: Piezowandler schwingen aufgrund der größeren Masse länger nach als elektrostatische Wandler

b) Sendespannung

c) Verstärkungsziffer der Empfangsschaltung

Mißt man nun im On-line Betrieb bei jedem Sendeimpuls diese Nachschwingzeit mit, so wird hiermit die Wandlergüte permanent bestimmt und hierdurch erfindungsgemäß eine eigensichere Überwachung, Selbstüberwachung, des Ultraschallwandlers als Sender und Empfänger erreicht. Dies geschieht im Programmabschnitt 46. Zur Messung der Nachschwingzeit wird hierzu ein Ereigniszähler im Timer/Counter Baustein 19 verwendet. Fällt nun die Nachschwingzeit aus einem vorgegebenen Meßbereich heraus, so wird eine Fehlermeldung an das unbemannte Fahrzeug gegeben. Diese beinhaltet die Information, welche Wandler betroffen sind und gibt einen Hinweis auf die mögliche Fehlerursache.

Nach dem Abklingen der Nachschwingungsamplituden wird die gesamte Elektronik für einen möglichen Empfang reflektierter Ultraschallwellen umgeschaltet. Trifft eine solche an als Empfänger geschalteten Wandler 7, 8, 9, 10 ein, so wird die Welle von diesem in ein analoges elektrisches Signal rückgewandelt. Dieses Signal wird dann über die Empfangskopplung dem jeweiligen Analog-Multiplexer 32 bzw. 33 und von diesem dem entsprechenden Empfangsverstärker 34 bzw. 35 zugeführt. Dieser Verstärker weist als Besonderheit ein softwaremäßig umschaltbares, hochgütiges aktives Bandpaßfilter auf. Damit wird nicht nur ein guter Signal-Rauschabstand (S/N) und damit eine hohe Empfindlichkeit erzielt, sondern auch schmalbandig jeweils nur die Frequenz ausgefiltert, die ausgesandt wurde, womit ein erster Schritt zur Störechounterdrückung getan wird. Nach der Verstärkung des Signales wird dieses einen Komparator zugeführt, der bei Überschreiten einer Schwelle gesetzt wird. Der Ausgang des Komparators ist dann über diverse Schaltkreise in der digitalen Peripherie 20 an den Ein-Ausgabe-Baustein 17 bzw. 18 und Timer/Counter Baustein 19 angeschaltet. Damit wird die Zeit $\tau$ vom Beginn des Sendeimpulses bis zum Eintreffen des Echos gemessen. Dies geschieht im Programmschritt 47 (Echo-Zählung). Diese Zeit ist mit der Schallgeschwindigkeit der Luft zu multiplizieren und dem Faktor "2" zu dividieren. Das Ergebnis ist die Entfernung (X-Koordinate) vom Fahrzeug zum Hindernis. Der Faktor "2" berücksichtigt Hin- und Rückweg.

Es ist bekannt, daß im Industriebereich bei verschiedensten Vorgängen Ultraschallwellen generiert werden können. Da diese Wellen pegelmäßig durchaus den ausgesandten Wellen ähnlich sein können, muß Vorsorge getroffen werden, daß Eigenechos von den Störechos sicher unterschieden werden können. Erfindungsgemäß gelingt dies mit nur einer einzigen Messung, die in den Programmschritten 48, 49 ausgewertet werden. Mit diesem Verfahren wird eine Meßrate von ≈20Hz/Wandler erzielt werden. Für ein Fahrzeug, welches auf seiner Fahrzeugbreite von einem Meter, mit Ultraschallwandlern ausgerüstet ist, führt dies zu einer Reaktionszeit von 150 msec, was für ein rasches Reagieren des Fahrzeuges bei Abbrems- oder Ausweichmanövern wichtig ist.

Nachfolgend wird die Unterscheidung Eigenecho oder Störecho gemäß den Programmschritten 48 und 49, aus der Messung der Echofrequenz in Echtzeit und der Echofrequenzanalyse abgleitet, in Figur 3 beschrieben. An den Ausgängen der Empfangsverstärker 34 und 35 sind jeweils ein Zero-Cross Detektor 36, 37 angeschaltet. Mit diesen werden die eintreffenden Echoschwingungen digitalisiert. Die digitalisierten Schwingungen werden dann über Schaltkreise in der digitalen Peripherie 20 einem Ereigniszähler im Timer/Counter Baustein 19 zugeführt. Mit diesem wird jede zweite Echo-Schwingung in Echtzeit mit hoher Taktrate exakt gemessen und über Einlesebefehle der CPU 12 weitergegeben bzw. im RAM 14 abgespeichert.

In der Echofrequenzanalyse (Programmschritt 49), die sofort mit dem Ende des Echoimpulses beginnt, wird nun untersucht, ob die digitalisierten Echoschwingungen innerhalb eines vorgegebenen Frequenzbandes liegen. Ist dies der Fall und ist die Anzahl der gemessenen Schwingungen größer als eine vorgegebene Mindestanzahl, so wird dieses Echo als Eigenecho bewertet. Fällt hingegen eine bestimmte Anzahl von Echoschwingungen aus dem Frequenzrahmen oder wird die erwähnte Mindestanzahl unterschritten, so wird das gemessene Echo als Störecho interpretiert und für die Auswertung ignoriert. In diesem Falle erfolgt ein Rücksprung zum Abschnitt 47 - Echo-Zählung, in welchem dann in der Echtzeitebene auf möglicherweise dahinterliegende Eigenechos gewartet wird. Somit kann man mit dieser Methode sowohl durch kurze als auch durch amplitudenstärkere, längere Störechos ohne aufwendige Hardware-Integratorschaltungen quasi hindurchgesehen werden. Darüberhinaus kann man erfindungsgemäß bei breitbandigen elektrostatischen Wandlern mehrere Frequenzen in einen Sendeimpuls verschachteln, was zusätzlich Entscheidungshilfen für die Echoanalyse bringt. Somit offenbart dieses Verfahren durch die Programmschritte 48 und 49 erfindungsgemäß, daß mit genau einer einzigen Messung mit größter Sicherheit zwischen Eigen- und Störechos unterschieden werden kann, im Gegensatz zu anderen Ultraschallverfahren, wo durch zeitaufwendige Mittelwertbildung aus mehreren Messungen eine Störechounterdrückung versucht wird und damit ein Einsatz an unbemannten Fahrzeugen nur bedingt möglich ist.

Somit stehen nach diesem Verfahrensabschnitt folgende Informationen für die weitere Auswertung zur Verfügung:

a) Kenntnis über die Entfernung vom Fahrzeug zum Hindernis in Fahrtrichtung (X-Koordinate)

b) Kenntnis über die Richtigkeit des Echos

Damit nun eine Aussage über die genauere Lage des Hindernisses gemacht werden kann, muß nun in den weiteren Programmschritten 50 und 51 die Y-Koordinate, also der Abstand des Hindernisses quer zur Fahrtrichtung bezogen auf die Mittenachse des Fahrzeugs, bestimmt werden. Dies geschieht nun erfindungsgemäß mit Hilfe der Messung des Laufzeitunterschiedes $\Delta\tau$ .

Für die Bestimmung der Richtung, aus der ein Schall einfällt, wertet das Gerät weiterhin den Zeitunterschied des Schalleinfalls auf nebeneinanderliegende Wandler aus.

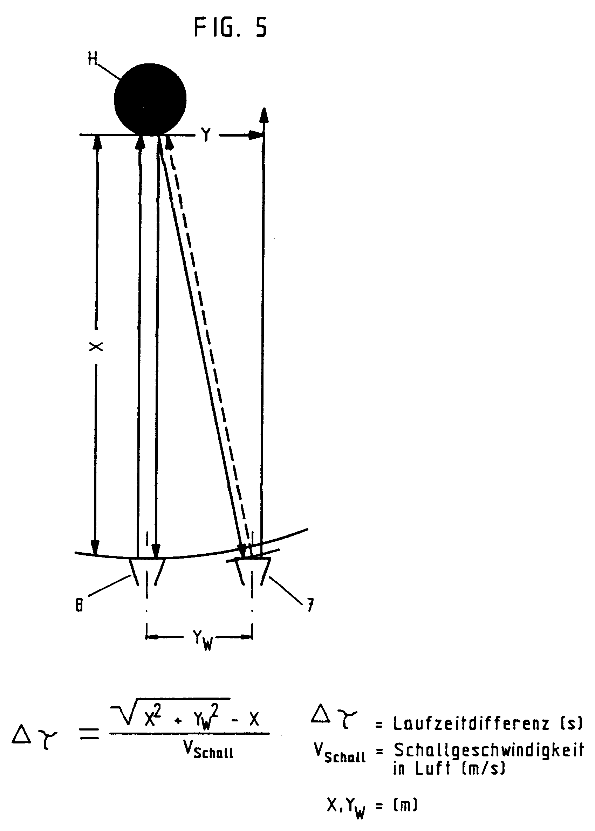

Zwei in einer Reihe nebeneinander liegende Wandler z. B. 7, 8 werden nicht nur gleichzeitig mit einem Sendeimpuls beaufschlagt sondern auch gleichzeitig als Empfänger betrieben. Die Beaufschlagung der beiden Wandler mit dem Sendeimpuls erfolgt gleichzeitig, gleichfrequent und gleichphasig. Beide Wandler 7, 8 als Empfänger werden an zwei getrennte Empfangsverstärkerschaltungen 34, 35 angeschaltet. Der Zeitunterschied des Echoeinfalls wird über diese getrennten Verstärker analog erfaßt und in der Folge digitalisiert an einen Ereigniszähler des Timer/Counter Bausteins 19 angelegt. Dies geschieht im Programmabschnitt 50 und muß zeitparallel mit den Programmschritten 48 und 49 ablaufen. Über Einlesebefehle der CPU 12 wird dabei der gemessene Laufzeitunterschied abgefragt und in der Folge im RAM 14 zwischengespeichert, da die Auswertung erst nach der Echofrequenzanalyse 49 beginnen kann. Der Auswertung des Laufzeitunterschiedes $\Delta\tau$ , liegt nun das in Fig. 5 veranschaulichte Prinzip zugrunde. Es ist daraus leicht erkennbar, daß das Hindernis H mit den beiden Wandlern 7, 8 ein rechtwinkliges Dreieck bildet. Damit ergibt sich der Laufzeitunterschied der einfallenden Echos aus der dort angegebenen Formel. Mit der gleichen Überlegung läßt sich der Laufzeitunterschied ermitteln, wenn das Hindernis H mit den Wandlern 7, 8 ein schiefwinkeliges Dreieck bildet. Geht man des weiteren davon aus, daß die X-Koordinate bereits bestimmt wurde, sowie $\Delta\tau$ unmittelbar gemessen wurde, die Schallgeschwindigkeit ebenfalls bekannt ist, so kann die Y-Koordinate errechnet werden, was in dem Programmschritt 51 auch geschieht. Im dargestellten Ausführungsbeispiel kann sofort eine eindeutige Aussage über die Y-Koordinate gemacht werden. Nimmt man den Fall an, daß kein Laufzeitunterschied zwischen den beiden Empfängern auftritt, so kann das Hindernis entweder genau in der Mitte der beiden Empfänger positioniert sein oder es liegt ein quer zum Fahrzeug planer Reflektor (z. B. Wand) vor. Um auch ein Hindernis mit Oberflächen zu erkennen, die unterschiedliches Reflexionsvermögen haben, z. B. Kleidung, Schachteln etc. ist im Programmschritt 52 ein zusätzlicher Verfahrensschritt erforderlich.

Unter der Voraussetzung, daß das Ergebnis der ersten Messung (z. B. Wandler 7 und Wandler 8), im RAM 14 abgespeichert ist kann dieses Ergebnis durch Messung mittels Einbeziehung des folgenden Wandlers 9 präzisiert werden. Das heißt, bei der zweiten Messung werden dann die Wandler 8, 9 aktiviert, wobei der Meßablauf wiederum vollkommen dem bereits geschilderten entspricht. Danach werden im Programmschritt 52 die Ergebnisse aus der ersten und zweiten Messung verglichen, und es werden in diesem Programmschritt 52 die Koordinatenangaben (X/±Y) des Hindernisses vorbereitend, falls plausibel, für die spätere Übergabe an das Fahrzeug im RAM 14 abgelegt. Unter plausibel ist beispielsweise bei einer Wand, die parallel zur Fahrzeugvorderkante verläuft der gleiche x-Abstand bei Messung mit Wandler 7, 9 und Wandler 8, 9 zu verstehen. Dies kann nur eine einzige Koordinatenangabe (X/±Y) bei kleinen, punktförmigen Hindernissen oder es können auch mehrere Koordinatenangaben (XN/±YN) bei entsprechenden größeren, breiteren Hindernissen sein. Im weiteren Meßverlauf werden dann Schritt für Schritt die nächstliegenden Wandler in die Messung eingebunden, das heißt, im nachfolgenden Schritt werden die Wandler 9 und 10 zur Ortung herangezogen. Dabei werden jedesmal in der bereits geschilderten Art und Weise die neu gewonnenen Meßergebnisse mit den alten verglichen und bei neuen Erkenntnissen diese

EP 0 326 623 B1

entsprechend im RAM 14 abgelegt.

Nach vollständigem Durchlauf über die gesamte Breite des Fahrzeugs ergibt sich somit ein Bild über die Lage und Ausdehnung möglicher Hindernisse. Zur endgültigen Abrundung dieses Bildes, wird nun noch einmal dieses Bild, jetzt als Gesamtbild über die gesamte Breite betrachtet, hinsichtlich seiner Plausibilität untersucht. Erst dann erfolgt die Übergabe der Daten an das Fahrzeug. Beim nächsten Durchlauf, der beispielsweise von Wandler 7, 8 oder von 10, 9 beginnen kann, wird dann das alte Bild mit dem neu gewonnen Bild verglichen. Ergeben sich daraus neue Werte, so erfolgt neuerlich die entsprechende Datenübergabe zum Fahrzeug. Stimmen die neu gewonnenen Bilder mit den alten überein, so wird eine neuerliche Datenübergabe unterlassen.

Hierdurch können erfindungsgemäß auch links und rechts des Fahrzeugs einzuhaltende Sicherheitsbereiche in die Hindernisortung miteinbezogen werden.

Da das Verfahren, wie schon erwähnt wurde, mit einer hohen Meßrate ≈20Hz/Wandler arbeitet, können Hindernisse sehr rasch erfaßt werden (z. B. Fahrzeugbreite ein Meter = Erfassungszeit ≈150 msec). Dies bedeutet wiederum eine sehr schnelle Datenübergabe zum Fahrzeug, womit diese rechtzeitig reagieren kann. Ist dabei das Hindernis über die Gesamtbreite des Fahrzeugs erstreckt, so wird durch die entsprechende Bildinformation ein Abbremsen des Fahrzeugs initiiert. Im Falle nur einer Teilerstreckung über die Fahrzeugbreite, oder überhaupt eines punkt- oder linienförmigen Hindernisses wird über Steuerbefehle das Fahrzeug um dieses Hindernis herumgelenkt.

Dieses Verfahren zeichnet sich nicht nur durch eine große Ortungsgenauigkeit sondern auch durch eine hohe Ortungsempfindlichkeit aus. So kann z. B. eine Taschenlampenbatterie, die in 2,5 m Entfernung zum Fahrzeug am Boden liegt, geortet werden. Es können aber auch Kabel mit einem Durchmesser von z. B. 3 mm, die zufälligerweise frei von einer Decke herunter vor dem Fahrzeug hängen, in einer Entfernung bis zu 3m detektiert werden.

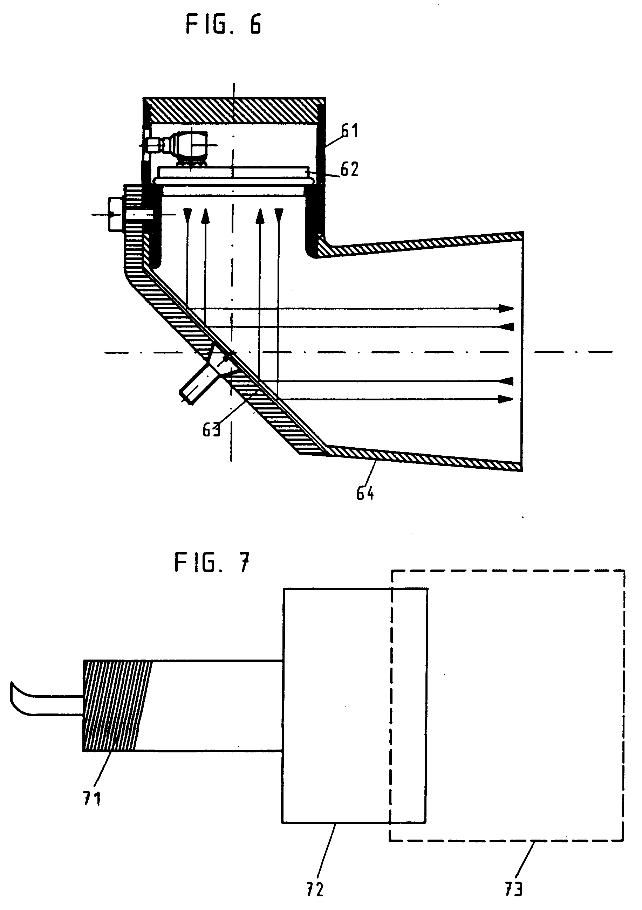

Gemäß Fig. 6 ist in einem kreiszylindrischen Gehäuse 61 ein Ultraschallwandler 62 angeordnet, es handelt sich hierbei um einen elektrostatischen Wandler. Vom Ultraschallwandler 62 ausgehende Ultraschallwellen werden über einen elliptischen Umlenkspiegel 63 über einen konischen kreisförmigen Ausgangskanal 64 abgestrahlt. Hiermit wird einerseits erreicht, daß die bei der Abstrahlung unangenehmen Nebenkeulen eliminiert werden und die Hauptkeule gebündelt und andererseits der Ultraschallwandler 62 gegenüber Umwelteinflüsse sicher untergebracht ist.

Fig. 7 zeigt einen Piezoultraschallwandler, der über ein Schraubgewinde 71 mit der Frontseite eines nicht dargestellten unbemannten Fahrzeugs verbunden ist. An der Vorderseite des Wandlers 72 ist ein Horn 73 angebracht. Hierdurch wird ebenfalls eine gute Bündelung und damit gute Richtwirkung des Strahlungsfeldes erzielt.

**Patentansprüche**

1. Verfahren zum Orten eines Hindernisses in Bezug auf ein mit einem unbemannten beweg- und lenkbaren Fahrzeug (1) mitbewegten Koordinatensystem mittels in Fahrtrichtung von Sendern (7,8,9) abgestrahlten und bei Vorhandensein eines Hindernisses (H) von Aufnehmern empfangenen reflektierten Ultraschallwellen, wobei entsprechend der empfangenen Informationen zur Vermeidung einer Kollision Lenk- und/oder Bremssignale an das Fahrzeug weitergegeben werden, dadurch gekennzeichnet, daß ein Ultraschallimpuls aus zwei nebeneinanderliegenden Quellen (7,8,) gleichphasig und gleichfrequent ausgesandt wird, daß eine reflektierte Ultraschallwelle an den Stellen der Sendung des Ultraschallimpulses aufgenommen wird, daß eine Analyse der empfangenen Informationen durchgeführt wird, daß anschließend um eine Quelle nach Abschalten der ersten Quelle fortgeschritten wird und die zweite mit einer dritten neben dieser liegenden Quelle (g) gleichphasig und gleichfrequent den Ultraschallimpuls aussendet und eine auftretende reflektierte Schallwelle an den jetzigen Stellen der Sendung des Ultraschallimpulses aufgenommen wird, daß eine Frequenzanalyse der empfangenen Werte durchgeführt wird, daß diese Fortschaltung der Impulsaussendung und des Echoempfangs über die gesamte zu überwachende Breite des Fahrzeugs (1) durchgeführt wird und daß die Laufzeit ($\tau$) der reflektierten Ultraschallwellen zu den Stellen ihrer Sendung und durch Differenzbildung ($\Delta\tau$) hieraus die Lage eine Hindernisses zum Koordinaten ursprung am Fahrzeug bestimmt wird.

2. Verfahren nach Anspruch 1, dadurch gekennzeichnet, daß bei Fortschalten auf die nächsten beiden Sender (8,9) gleichzeitig die Frequenz der gleichphasig auszusendenden Ultraschallwelle geändert wird.

8

**3.** Verfahren nach Anspruch 1, dadurch gekennzeichnet, daß in einem zweiten Durchlauf über die Breite ein Impuls mit anderer Frequenz ausgesandt wird und daß sich hieran mindestens ein noch weiterer Durchlauf mit einem Aussenden eines noch weiteren Impulses mit anderer Frequenz anschließt.

**4.** Verfahren nach Anspruch 1 oder Anspruch 2 oder Anspruch 3, dadurch gekennzeichnet, daß der Durchlauf des oder der Impulse von links nach rechts über die Breite des Fahrzeugs (1) erfolgt.

**5.** Verfahren nach Anspruch 1 bis Anspruch 3, dadurch gekennzeichnet, daß der Durchlauf des ersten und aller nachfolgender ungeradzahligen Einzelimpulse über die Breite des Fahrzeuges (1) von links nach rechts und der Durchlauf aller nachfolgenden geradzahligen Einzelimpulse von rechts nach links über die Breite des Fahrzeugs erfolgt.

**6.** Verfahren nach Anspruch 1, dadurch gekennzeichnet, daß mindestens eine Laufzeitschwelle vorgesehen wird, daß die Laufzeit der reflektierten Ultraschallwelle zu den Stellen ihrer Sendung und zur zweiten Stelle ihrer folgenden Sendung bestimmt wird und hieraus die Lage die Erstreckung des Hindernisses (H) quer oder ein weiteres Hindernis zum Fahrzeug bestimmt wird.

**7.** Ortungssystem für die Lage eines Hindernisses zu einem mit einem unbemannten Fahrzeug bewegten Koordinatensystem mit an der Frontseite (5) des Fahrzeugs (1) angeordneten Ultraschallsendern (7,8,9,10) und Ultraschallempfängern, insbesondere zur Durchführung des Verfahrens nach den vorhergehenden Ansprüchen, dadurch gekennzeichnet, daß mehr als zwei Wandler als Ultraschallsender (7,8,9,10) und Ultraschallempfänger (7,8,9,10) ausgebildet sind, daß die zwei ersten Wandler zunächst einen gleichfrequenten und gleichphasigen Impuls abstrahlen, daß anschließend die beiden Wandler nach einer Abklingzeit für die ausgesandte Schallfrequenz als Ultraschallempfänger über einen vorgegebenen Zeitraum geschaltet werden, der den doppelten Weg einer vorgegebenen Überwachungsstrecke entspricht einschließlich eines Sicherheitsbereichs auftretender reflektierter Ultraschallwellen aufnehmen, daß alle Informationen einem Rechner zur Frequenzanalyse zugeleitet werden, daß anschließend der erste Wandler abgeschaltet und ein dritter Wandler, der denselben Abstand zum zweiten Wandler besitzt, wie dieser zum ersten, zusammen mit dem zweiten Wandler als Doppelsender den gleichfrequenten und gleichphasigen Impuls aussenden und empfangen und daß diese Fortschaltung über die gesamte, zu überwachende Breite des Fahrzeugs durchgeführt und daß die Laufzeit ($\tau$) der reflektierten Ultraschallwelle zu den Stellen ihrer Sendung und durch Differenzbildung ($\Delta\tau$) hieraus die Lage eine Hindernisses zum Koordinaten ursprung am Fahrzeug bestimmt wird.

**8.** Ortungssystem nach Anspruch 7, dadurch gekennzeichnet, daß die Wandler (7,8,9,10) als Sender je einzeln mit einer Sendeschaltung verbunden sind und als Empfänger bei ungerader Anzahl der Wandler mindestens zwei Wandler mit einem Empfangsverstärker multiplex geschaltet, verbunden sind.

**9.** Ortungssystem nach Anspruch 8, dadurch gekennzeichnet, daß ein elektrostatischer Wandler (62) in einem abgewinkelten kreisförmigen Gehäuse (61) mit einer konischen Schallöffnung (64) angeordnet ist, daß an die Schallöffnung eine unter 45° geneigte elliptische Wand (63) als Reflektor anschließt, daß der Wandler in einem Trichter angeordnet ist, dessen Eintrittsfläche senkrecht zur Austrittsfläche der Schallöffnung ist und daß die Ultraschallwellen unter einem Winkel von 90° durch den Reflektor abgelenkt werden und daß die schallabstrahlende Fläche des Wandlers parallel zur Eintrittsfläche des Trichters ist.

**10.** Ortungssystem nach Anspruch 8, dadurch gekennzeichnet, daß ein Piezowandler den Boden eines kreisförmigen Gehäuses mit einer Schallöffnung bildet und daß die schallabstrahlende Fläche des Piezowandlers parallel zur Austrittsfläche der Schallöffnung ist.

**Claims**

**1.** Process for the location of an obstruction in relation to a movable, directed, unmanned vessel (1) moved by a system of coordinates by means of ultru-sonic waves transmitted in the direction of movement and received by receivers of the reflected ultra-sonic waves in the event of presence of an obstruction (H), whereby steering or braking signals are provided to the vessel in accordance with the information received for avoiding a collision, wherein an ultra-sonic pulse with synchronized phase and having he same frequency is transmitted from two sources (7, 8) positioned next to each other, a reflected ultra-sonic pulse is received at the points of transmission of the ultra-sonic pulse, an analysis is made of the received information, and after the switching off of the first source the pulse which has synchronized phase and the same frequency is transmitted from the second source and a third source (g) positioned next to it and the reflected sound wave is received at the current points of transmission and an analysis is made of the received values, and wherein this movement of the points of transmission and reception of the echoes is carried out for the whole breadth of the vessel (1) to be monitored, and the position of the obstruction is determined in relation to the origination of the coordinates on the vessel by means of the duration ($\tau$) of the ultra-sonic waves reflected to the points of transmission and by determination of the difference ($\Delta\tau$) in these.

2. Process in accordance with claim 1, wherein simultaneous changing of the frequency of the ultra-sonic wave to be transmitted occurs at the moment of the progressive switching to the next two transmitters (8, 9).

3. Process in accordance with claim 1, wherein in a second running over the breadth of the vessel a pulse with another frequency is transmitted and this is followed by at least one further run through with the transmission of a further pulse with another frequency.

4. Process in accordance with any of claims 1 to 3, wherein the run-through of the pulse or pulses occurs accross the breadth of the vessel (1) from left to right.

5. Process in accordance with any of claims 1 to 3, wherein the run-through of the first and all following run throughs with odd ordinals of separate pulses occur over the breadth of the vessel (1) from left to right and all run throughs with even ordinals of separate pulses occur over the breadth of the vessel (1) from right to left.

6. Process in accordance with claim 1, wherein at least a threshold transmission time is provided such that the duration of the ultra-sonic wave reflected to the place of its transmission and to the second point of its following transmission is determined and consequently the cross-extent of the obstruction (H) or of a further obstruction to the vessel is determined.

7. System for the location of obstructions to an unmanned vessel moved by a coordination system with ultra-sonic transmitters (7, 8, 9, 10) and ultra-sonic receivers disposed on the front (5) of the vessel (1), particularly for carrying out the process in accordance with the foregoing claims, wherein more than two transducers are formed as ultra-sonic transmitters (7, 8, 9, 10) and ultra-sonic receivers (7, 8, 9, 10), the first two transducers first emit a pulse having the same phase and the same frequency, then both the transducers as ultra-sonic receivers are switched off after a decay-time for the transmitted audio-frequency over a set time-period, the double path of a set pre-determined tracing path includes a safety area of received reflected ultra-sonic waves, all information is fed to a computer for the analysis of frequencies, then the first transducer is switched off and a third transducer, which is separated from the second transducer by the same distance from which the second transducer is separated from the first transducer, together with the second transducer, acts as a double transmitter, transmitting a pulse having the same phase and the same frequency and receiving the reflected wave, this continuous switching operation is carried out over the whole breadth of the vessel to be monitored, and the duration ($\tau$) of the ultra-sonic waves reflected to the point of their transmission and the determination of the difference ($\Delta\tau$) between the said reflected ultra-sonic waves determines the location of an obstruction in relation to the source of the coordinates on the vessel.

8. Location system in accordance with claim 7, wherein the transducers (7, 8, 9, 10) as transmitters are individually connected to a transmit switch and as receivers of transducers with odd ordinals are connected to at least two transducers with receiving amplifiers switched by multiplexers.

9. Location system in accordance with claim 8, wherein an electrostatic transducer (62) is disposed in a distorted circular housing (61) with a conical sound aperture (64), an elliptical wall (63) which is a reflector is connected to the sound aperture and inclined at an angle of 45° to the sound aperture, the transducer is disposed in a horn the input surface of which is vertical to the output surface of the sound aperture and the ultra-sonic waves are directed through an angle of 90° by the reflector, and the sound emitting surface of the transducer is parallel to the input surface of the horn.

**10.** Location system in accordance with claim 8, wherein a piezo-transducer forms the base of a circular housing with a sound aperture and the sound emitting surface of the piezo-transducer lies parallel to the output surface.

**Revendications**

**1.** Procédé pour détecter un obstacle pat rapport à un système de coordonnées transporté par un véhicule (1) sans conducteur, mobile et dirigeable, à l'aide d'ondes ultrasoniques réfléchies, rayonnées dans le sens du déplacement par des émetteurs (7, 8, 9) et reçues par des enregistreurs en présence d'un obstacle (H), auquel cas, selon les informations reçues, des signaux de direction et/ou de freinage sont transmis au véhicule pour éviter une collision, caractérisé en ce qu'on émet une impulsion ultrasonique à partir de deux sources voisines (7, 8), ayant des phases et des fréquences identiques ; que l'on enregistre une onde ultrasoniquo réfléchie, en les points d'émission de l'impulsion ultrasonique ; que l'on procède à une analyse des informations reçues ; que l'on progresse ensuite d'une source, après mise hors circuit de la première source, et la deuxième émet, à la même fréquence et en phase avec une troisième source (9), disposée à côté de cette dernière, l'impulsion ultrasonique, une onde sonore réfléchie arrivante étant enregistrée en les points actuels d'émission de l'impulsion ultrasonique ; que l'on procède à une analyse de fréquence des valeurs reçues ; que l'on met en oeuvre cette progression de l'émission d'impulsions et de la réception d'un écho sur la totalité de la largeur à surveiller du véhicule (1) ; et que l'on détermine la temps de propagation ($\tau$) des ondes ultrasoniques réfléchies jusquà leurs points d'émission et, par différenciation (delta$\tau$), on détermine la position d'un obstacle par rapport à l'origine des coordonnées du véhicule.

**2.** Procédé selon la revendication 1, caractérisé en ce que, lors de la progression aux deux émetteurs suivants (8, 9), on a simultanément une modification de la fréquence de l'onde ultrasonique qui doit être émise en phase.

**3.** Procédé selon la revendication 1, caractérisé en ce que, lors d'un deuxième passage sur la largeur, on émet une impulsion à une haute fréquence, et que ce passage est suivi d'au moins encore un autre passage, avec émission d'uns autre impulsion, ayant une fréquence différente.

**4.** Procédé selon la revendication 1 ou 2 ou 3, catactérisé en ce que le passage de la ou des impulsions s'effectue de gauche à droite sur la largeur du véhicule (1).

**5.** Procédé selon l'une des revendications 1 à 3, caractérisé en ce que le passage de la première impulsion individuelle et de toutes les impulsions individuelles suivantes impaires s'effectue sur la largeur du véhicule (1) de gauche à droite, le passage de toutes les impulsions individuelles suivantes paires s'effectuant de droite à gauche sur la largeur du véhicule.

**6.** Procédé selon la revendication 1, caractérisé en ce qu'on prévoit au moins un seuil de temps de propagation ; et que l'on détermine le temps de propagation de l'onde ultrasonique réfléchie jusqu'aux points de son émission et jusqu'au deuxième point de son émission suivante, et, à partir de là, on détermine la position en étendue de l'obstacle (H) transversalement par rapport au véhicule, ou encore un autre obstacle à ce dernier.

**7.** Système pour détecter la position d'un obstacle par rapport à un système de coordonnées mobile avec un véhicule sans conducteur, avec des émetteurs d'ultrasons (7, 8, 9, 10) et des récepteurs d'ultrasons disposés sur le côté avant (5) du véhicule (1), en particulier pour mettre en oeuvre le procédé selon les revendications précédentes, caractérisé en ce que plus de deux transducteurs sont conçus comme des émetteurs d'ultrasons (7, 8, 9, 10) et des récepteurs d'ultrasons (7, 8, 9, 10) ; que les deux premiers transducteurs rayonnent d'abord une impulsion de même fréquence et de même phase ; puis que les deux transducteurs, après un temps d'amortissement de la fréquence acoustique émise, sont en tant que récepteurs d'ultrasons commutés sur un laps de temps prédéfini, qui correspond au double de la trajectoire d'une distance de surveillance prédéfinie, y compris une zone de sécurité pour les ondes ultrasoniques réfléchies ; que toutes les informations sont envoyées à un ordinateur pour analyse de fréquence ; puis que le premier convertisseur est mis hors circuit, et un troisième transducteur, situé à la même distance par rapport au deuxième transducteur que ce dernier par rapport au premier, émet et reçoit, avec le deuxième transducteur, servant d'émetteur double, l'impulsion ayant la même fréquence et la même phase ; et que cette progression s'effectue sur la totalité de la largeur à surveiller du véhicule ; et que l'on détermine le tempe de propagation ($\tau$) des ondes ultrasoniques réfléchies jusqu'aux points de leur émission et, par différenciation (delta $\tau$), on détermine la position de l'obstacle par rapport à l'origine des coordonnées sur le véhicule.

**8.** Système de détection selon la revendication 7, caractérisé en ce que les transducteurs (7, 8, 9, 10) sont chacun, en tant qu'émetteurs, reliés individuellement à un circuit émetteur et que, en tant que récepteurs en présence d'un nombre impair de transducteurs, au moins deux transducteurs sont raccordés à un amplificateur de réception, monté en multiplex.

**9.** Système de détection selon la revendication 8, caractérisé en ce qu'un transducteur électrostatique (62) est disposé dans un carter circulaire biseauté (61) comportant un pavillon (64) conique ; que le pavillon se poursuit par une paroi elliptique (63), inclinée à 45° et servant de réflecteur ; que le transducteur est disposé dans un entonnoir, dont la surface d'entrée est perpendiculaire à la surface de sortie du pavillon ; et que les ondes ultrasoniques sont déviées par le réflecteur sous un angle de 90° ; et que la surface rayonnant les ondes acoustiques du transducteur est parallèle à la surface d'entrée de l'entonnoir.

**10.** Système de détection selon la revendication 8, caractérisé en ce qu'un transducteur piézo-électrique forme le fond d'un carter circulaire muni d'un pavillon; et que la surface rayonnant un rayonnement acoustique du transducteur piézo-électrique est parallèle à la surface de sortie du pavillon.

FIG.1

FIG.2

EP 0 326 623 B1

EP 0 326 623 B1

FIG. 3A

zum / vom
Analogteil

23

20 DIGITALE PERIPHERIE
Multiplexer, Flip-Flop, Mono-Flop, Gatter etc.

11

ÜBERNAHME VOM
FTS

16

ÜBERGABE ZUM
FTS

17 EIN-AUSGABE
BAUSTEIN

19 TIMER/
COUNTER
BAUSTEIN

18 EIN-AUSGABE
BAUSTEIN

EIN-AUSGABE
BAUSTEIN

13

14 RAM

15 EPROM

12 CPU

21 WATCH-
DOG-
TIMER

22 OSZIL-
LATOR

14

FIG. 3B

EP 0 326 623 B1

11

ZERO-CROSS DETEKTOR 36

EMPFANGSVERSTÄRKER

34

ANALOG MULTI-PLEXER 32

Sende-schalt. 24

Empfangs-auskoppl 28

7

zum / vom Digitalteil

SCHIEBEREGISTER

38

23

Sende-schalt. 25

Empfangs-auskoppl 29

8

ZERO-CROSS DETEKTOR

EMPFANGSVERSTÄRKER

35

ANALOG MULTI-PLEXER 33

37

Sende-schalt. 26

Empfangs-auskoppl 30

9

Sende-schalt. 27

Empfangs-auskoppl 31

10

FIG. 4

START —39

INITIALISIEREN —40

NEIN
SELFTEST OK?   JA   SELFTEST?   —42
JA   NEIN
SELFTEST-MUSTER AUSGEBEN   MESSEN?   NEIN   U-Schall
JA

PARAMETER - BERECHNUNG —43

SCHIEBEREGISTER-LADEN —44

SENDEN —45

MESSUNG DER NACHSCHWINGZEIT AUSWERTUNG ALLFÄLLIGER FEHLER —46

ECHO - ZÄHLUNG —47

MESSUNG DER ECHOFREQUENZ IN ECHTZEIT —48

ECHOFREQUENZANALYSE —49

JA   STÖRECHO?   MESSUNG DES LAUFZEITUNTERSCHIEDE —50
NEIN

AUSWERTUNG DES LAUFZEITUNTERSCHIEDES —51

AUSWERTUNG/AUSGABE (X/Y) —52

EP 0 326 623 B1

# FIG. 5

$$\Delta\tau = \frac{\sqrt{X^2 + Y_W^2} - X}{V_{Schall}}$$

$\Delta\tau$ = Laufzeitdifferenz (s)

$V_{Schall}$ = Schallgeschwindigkeit in Luft (m/s)

$X, Y_W$ = (m)

17

FIG. 6

FIG. 7